# Europäisches Patentamt

# European Patent Office

# Office européen des brevets

(19)

(11) Veröffentlichungsnummer: **0 005 423**
**B1**

(12) ## EUROPÄISCHE PATENTSCHRIFT

(45) Veröffentlichungstag der Patentschrift:
08.06.83

(51) Int. Cl.³: **B 29 H 17/00**

(21) Anmeldenummer: **79890001.5**

(22) Anmeldetag: **02.05.79**

(54) Vorrichtung zum Giessen oder Spritzen von Fahrzeugreifen.

(30) Priorität: **03.05.78 AT 3234/78**

(43) Veröffentlichungstag der Anmeldung:
**14.11.79 Patentblatt 79/23**

(45) Bekanntmachung des Hinweises auf die Patenterteilung:
**08.06.83 Patentblatt 83/23**

(84) Benannte Vertragsstaaten:
**BE CH DE FR GB IT LU NL SE**

(56) Entgegenhaltungen:
**AT-B-339 757**
**FR-A-2 005 116**
**FR-A-2 052 885**
**FR-A-2 187 535**
**FR-A-2 272 825**
**FR-A-2 348 066**
**FR-A-2 354 191**
**US-A-3 608 605**
**US-A-3 924 982**
**US-A-4 086 047**

(73) Patentinhaber: **POLYAIR MASCHINENBAU Ges.m.b.h.,**
**A-2421 Kittsee/Bgld. (AT)**

(72) Erfinder: **Schmidt, Oskar, Chikago 5, A-2421 Kittsee (AT)**

(74) Vertreter: **Kretschmer, Adolf, Dipl.-Ing.,**
**Schottengasse 3a, A-1014 Wien (AT)**

## Vorrichtung zum Giessen oder Spritzen von Fahrzeugreifen

Die Erfindung bezieht sich auf eine Vorrichtung zum Giessen oder Spritzen von Fahrzeugreifen, mit welcher um einen Kern in getrennten Arbeitsgängen mindestens zwei verschiedene Bereiche des Reifens gegossen oder gespritzt werden und welche mindestens zwei Gruppen von relativ zum Kern bewegbaren, die verschiedenen Bereiche des Reifens formenden Aussenschalen aufweist, die von zwei Segmentgruppen getragen werden, deren Segmente radial an den Kern anstellbar sind.

Eine derartige Einrichtung ist aus der AT-B-339757 bekannt geworden, wobei die beiden Gruppen der Schalen dazu dienten, zunächst einen Reifeninnenkörper zu formen und hierauf aus einem für die Verschleissschicht geeigneten zweiten Material die Lauffläche sowie das Laufflächenprofil auszubilden.

Bei herkömmlichen Luftreifen werden die vom Luftdruck stammenden Kräfte durch diagonal oder radial angeordnete Textil- und bzw. oder Stahlgewebe aufgenommen. Wegen dieser Gewebe muss die Herstellung des Luftreifens zum grössten Teil durch Handarbeit erfolgen, was nachteiligerweise hohe Lohnkosten, grossen Zeitaufwand und relativ grosse Ungenauigkeit beim Einbringen und Fixieren der Gewebeeinlagen nach sich zieht, so dass auch verhältnismässig viel Ausschuss anfällt.

Man hat deshalb versucht, Luftreifen aus Kunststoff-Elastomeren ohne derartige Gewebeeinlagen herzustellen, wobei die genannten Kräfte vom Elastomer allein aufgenommen werden. Dies ermöglicht eine rationelle und genaue automatische Reifenherstellung im Spritzgussverfahren.

Die Herstellung von Reifen aus Elastomeren ohne Verstärkungseinlage stösst aber dann auf Schwierigkeiten, wenn solche Reifen mit einem Höhen-Breiten-Verhältnis erwünscht sind, das vom Verhältnis 100:100 abweicht, denn ein torusförmiger Hohlkörper von geringer und konstanter Wandstärke sucht kreisförmigen Querschnitt anzunehmen.

Aus der US-A-3608605 sowie aus der FR-A-2052885 ist es jeweils bereits bekannt geworden, Reifenkörper dadurch zu verstärken, dass eine Umwicklung in Umfangsrichtung vorgenommen wird. Die Vorrichtung nach der eingangs genannten AT-B-339757, von welcher die Erfindung ausgeht, war jedoch konstruktiv ungeeignet, um die Aufbringung von Verstärkungseinlagen zu ermöglichen.

Die Erfindung hat sich nun zum Ziel gesetzt, eine Vorrichtung der eingangs genannten Art dahingehend weiterzubilden, dass zwischen Reifenkörper und Lauffläche in einfacher Weise Verstärkungseinlagen angeordnet werden können. Zur Lösung dieser Aufgabe ist die Erfindung dadurch gekennzeichnet, dass die Segmente um quer zur Achse und seitlich des herzustellenden Reifens verlaufende Achsen schwenbkar gelagert sind, dass der Kern drehbar gelagert ist und dass eine Verstärkungseinlage über eine parallel zur Achse des Reifens verschiebbare Führungseinrichtung mittels des drehbaren Kerns auf den inneren Reifenkörper aufwickelbar ist. Durch diese Ausbildung wird es ermöglicht, auf einen bereits gegossenen oder gespritzten Reifenkörper innerhalb der gleichen Vorrichtung und ohne aufwendige zusätzliche Manipulationen eine aus Fäden, Bändern od. dgl. bestehende Verstärkungseinlage in Umfangsrichtung des Reifens aufzuwickeln, worauf nachfolgend wiederum mit der gleichen Vorrichtung ein weiterer Bereich des Fahrzeugreifens unter Einbettung der Verstärkungseinlage gegossen oder gespritzt werden kann. Die Verstärkungseinlage kann hierbei bevorzugt in Form von vorgereckten Fäden, Bändern od. dgl. auf den Reifenkörper aufgewickelt werden und schraubenlinienförmig in Umfangsrichtung aufgebracht werden. Zur Erzielung nebeneinanderliegender Lagen der Verstärkungseinlage, d. h. einer schraubenlinienförmigen Umwicklung des Reifenkörpers, ist vorzugsweise die Führungseinrichtung mit einem Spindeltrieb versehen, der die Führungseinrichtung relativ zum Kern axial bewegt.

In konstruktiv einfacher Weise können die Segmente an einer Säule od. dgl. schwenkbar gelagert sein, die geteilt ist und deren beide Teile axial zueinander bewegbar sind, wobei an den Säulenteilen je ein Flansch drehbar gelagert ist und die Flansche mit die Seitenteile des Reifens formenden, den Kern zwischen sich zentrierenden Formplatten verbindbar sind und wobei ferner der Drehantrieb mit einem der Flansche gekuppelt ist. Eine derartige Ausbildung zeichnet sich durch eine hohe Stabilität aus und erlaubt die sichere Festlegung des Drehantriebs.

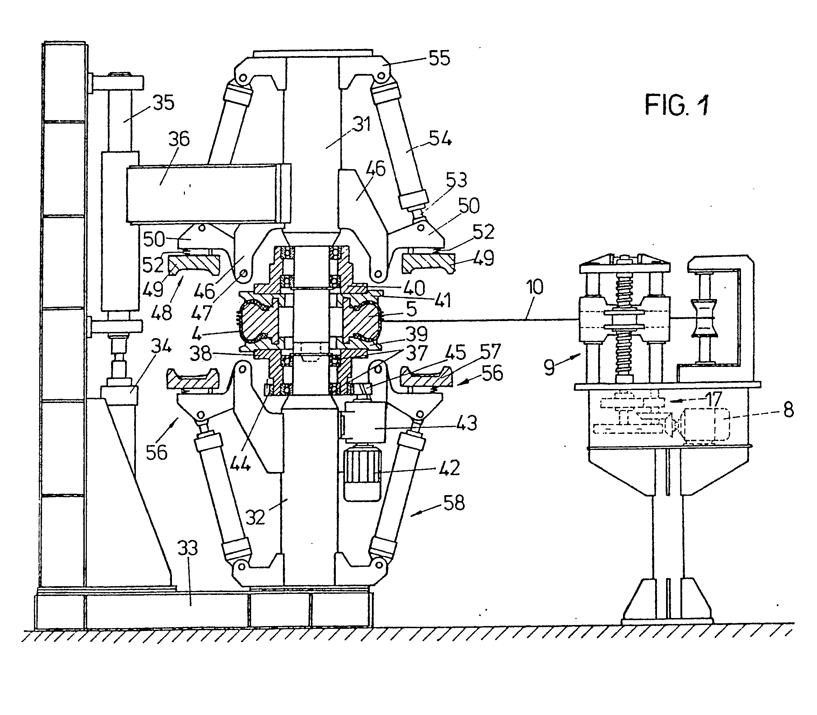

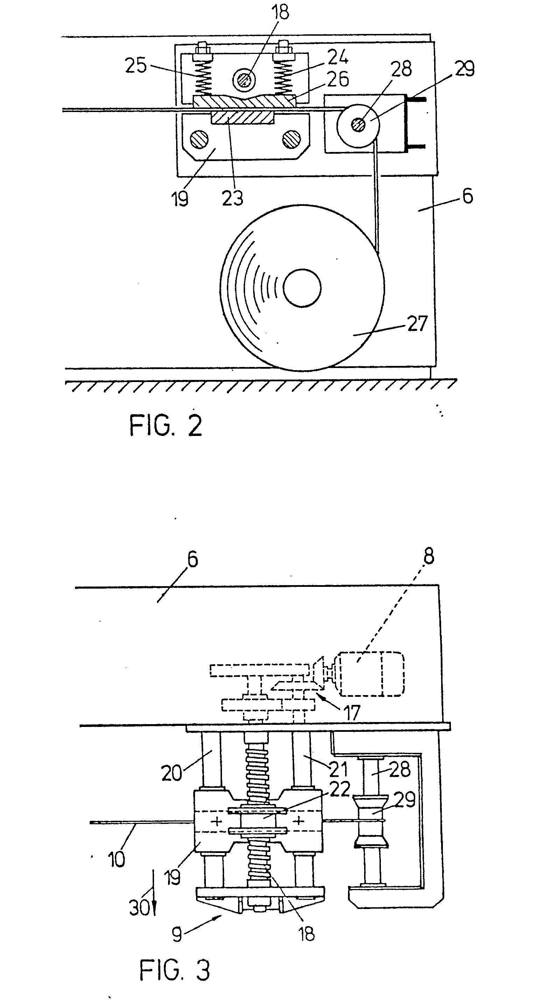

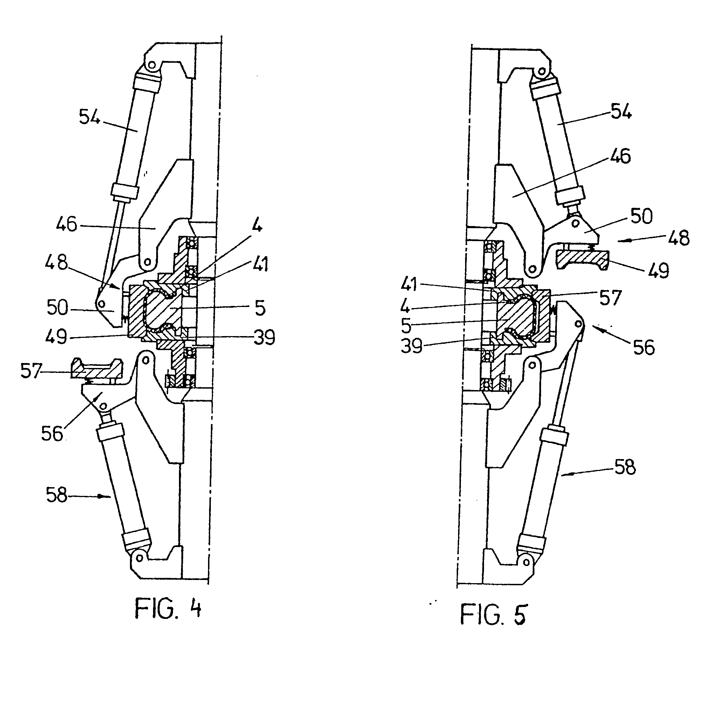

Die Erfindung wird nachfolgend anhand von in der Zeichnung dargestellten Ausführungsbeispielen näher erläutert. In dieser zeigen Fig. 1 die Ansicht einer erfindungsgemässen Vorrichtung, Fig. 2 und 3 Details der Führungseinrichtung für die Verstärkungseinlage und Fig. 4 und 5 Details der Vorrichtung nach Fig. 1 in aufeinanderfolgenden Arbeitsschritten.

Die in den Fig. 1, 4 und 5 dargestellte Vorrichtung besitzt eine geteilte Säule, mit den beiden Teilen 31 und 32. Der Teil 32 ist in einem Maschinengestell 33 fest gelagert. Im gleichen Gestell 33 ist eine Vertikalführung 35 befestigt, an der über einen Kolbenantrieb 34 ein mit dem Säulenteil 31 verbundener Arm 36 bewegbar ist.

Am oberen Ende des Säulenteiles 32 ist über Lager 37 ein Aufspannflansch 38 drehbar gelagert, mit dem eine einen Seitenteil des Reifens formende untere Formplatte 39 verschraubt ist. In analoger Weise ist am oberen Säulenteil 31 ein Aufspannflansch 40 drehbar gelagert, mit dem eine die gegenüberliegende Seite des Reifens formende obere Formplatte 41 verschraubt ist. Die beiden Formplatten 39 und 41 nehmen zwischen sich den Kern 5 auf, so dass Formplatten, Kern und Aufspannflansche eine Einheit bilden, die durch einen Motor 42 mit Getriebe 43 in Drehung versetzt werden kann. Hierzu ist der untere Aufspannflansch 38 mit einem Zahnkranz 44 versehen, das mit einem Ritzel 45 des Getriebes 43 kämmt.

Der obere Säulenteil 31 weist eine Anzahl von Armen 46 auf, die über Lagerbolzen 47 Segmente 48 schwenkbar lagern. Diese Segmente 48 bestehen aus Aussenschalen 49 und Segmentträgern 50, wobei die Aussenschalen 49 in der in Fig. 4 gezeichneten Stellung zusammen mit den beiden Formplatten 39 und 41 die Aussenkontur des Reifenkorpus 4 bestimmen. Die Innenkontur wird durch den Kern 5 bestimmt.

Die Aussenschalen 49 sind in den Segmentträgern 50 unter Zwischenschaltung von Federn 52 federnd gehalten. An den Segmentträgern 50 greifen überdies Kolbenstangen 53 von Zylinder-Kolbenaggregaten an, deren Zylinder 54 an Ansätzen 55 des Säulenteiles 31 angelenkt sind.

Am unteren Säulenteil 32 sind in genau gleicher Weise wie am oberen Teil 31 Segmente 56 gelagert, die sich von den Segmenten 48 nur dadurch unterscheiden, dass die Aussenschalen 57 eine andere Kontur besitzen. Im gezeichneten Beispiel entsprechen die Aussenschalen 57 der Lauffläche des herzustellenden Reifens. Auch an den Segmenten 56 greifen Zylinder-Kolbenaggregate 58 an.

Seitlich neben der besprochenen Einrichtung ist eine Führungseinrichtung 9 für die Verstärkungseinlage 10 aufgestellt, die sich von der Führungseinrichtung nach den Fig. 2 und 3 nur dadurch unterscheidet, dass sie um 90° verdreht ist.

Die Arbeitsweise der in den Fig. 1, 4 und 5 dargestellten Vorrichtung ist wie folgt:

Bei ausgeschwenkten Segmenten 48 und 56 wird der obere Säulenteil 31 mit allen an ihm befestigten Teilen gehoben und der Kern 5 eingelegt. Anschliessend wird der Säulenteil 31 wieder abgesenkt und somit der Kern 5 zwischen den beiden Formplatten 39 und 41 verspannt. Mittels der Zylinder-Kolbenaggregate 53, 54 werden die Segmente 48 in die in Fig. 4 dargestellte Lage verschwenkt und das für die Reifenherstellung verwendete Material, zweckmässig ein Elastomer, in den zwischen den Kern 5 einerseits und den Formplatten 39 und 41 sowie Aussenschalen 49 anderseits bestehenden Hohlraum eingespritzt bzw. gegossen.

Nachdem das Material soweit fest geworden ist, dass es seine Form beibehält, werden durch Betätigen der Zylinder-Kolbenaggregate 53, 54 die Segmente 48 in die in Fig. 1 dargestellte Stellung geschwenkt. Anschliessend wird ein Ende einer Verstärkungseinlage 10 am Reifenkorpus 4 befestigt und durch Einschalten der Motore 42 und 8 der Kern 5 samt Reifenkorpus 4 in Drehung versetzt sowie die Führung 9 bewegt.

Das Aufwickeln der Verstärkungseinlage 10 wird in den Fig. 2 und 3 näher erläutert. Bei der Ausführungsform der Führungseinrichtung 9 nach Fig. 2 und 3 ist ein Antriebskasten 6 vorgesehen, der den Antriebsmotor 8 für die Führungseinrichtung 9 der Verstärkungseinlage 10 aufnimmt. Der Antriebsmotor 8 treibt über ein aus Kegel- und Stirnrädern bestehendes Vorgelege 17 eine Spindel 18. Der Antrieb ist dabei in bekannter Weise umsteuerbar, so dass die Spindel 18 in verschiedenen Drehrichtungen antreibbar ist. Eine Führung 19 für die Verstärkungseinlage 10 ist an zwei Stangen 20 und 21 geführt und besitzt eine auf der Spindel 18 sitzende Mutter 22. Gegen eine untere Führungsplatte 23 der Führung 19 wird über Federn 24 und 25 unter Zwischenlage der Verstärkungseinlage 10 eine obere Führungsplatte 26 angedrückt. Die im Beispiel fadenförmige Verstärkungseinlage 10 gelangt von einem Wickel 27 über eine auf einer Führung 28 frei drehbare Rolle 29 zur Führung 19.

Die Verstärkungseinlage 10 wird unter Vermittlung des Reifenkörpers durch den drehbaren Kern 5, wie dies in Fig. 1 dargestellt ist, abgezogen. Gleichzeitig mit der Drehbewegung des Kerns 5 wird auch der Antriebsmotor 8 betätigt, so dass die Spindel 18 in Drehung versetzt wird und die Mutter 22 die Führung 19 samt der Verstärkungseinlage 10 in Richtung des Pfeiles 30 verschiebt. Die Verstärkungseinlage 10 wird auf den Reifenkorpus 4 daher schraubenförmig aufgewickelt.

Soll nur eine Lage auf den Korpus 4 aufgebracht werden, werden die beiden Antriebsmotoren am Ende der Vorschubbewegung der Führung 19 stillgesetzt und die Verstärkungseinlage 10 abgeschnitten sowie deren Ende am Reifenkorpus 4 befestigt. Es ist aber auch möglich, die Verstärkungseinlage 10 mehrlagig auf den Korpus 4 aufzuwickeln, wozu die Führung 19 durch Umsteuerung des Antriebes 8, 17 hin- und herverfahren wird.

Die Verstärkungseinlage 10 braucht nicht fadenförmig zu sein, es ist vielmehr auch möglich, z. B. schmale Bänder mit der gezeigten Vorrichtung aufzuwickeln. Wird der Antriebsmotor 8 nicht in Betrieb gesetzt, wobei die Führung 19 in einer Mittelstellung ist, können auch breitere Bänder ohne Steigung auf den Reifenkorpus 4 aufgewickelt werden.

Nach Beendigung des Wickelvorganges können die Segmente 56 durch die Zylinder-Kolbenaggregate 58 in die in Fig. 5 gezeigte Stellung verschwenkt werden. Es wird dann die Lauffläche des Reifens gespritzt bzw. gegossen. Nach dem Zurückschwenken der Segmente 48 und Hochfahren des Säulenteiles 31 samt Formplatte 41 ist der Kern 5 samt dem fertigen Reifen der Vorrichtung zu entnehmen.

Bei der Beschreibung der Arbeitsweise der Vorrichtung wurden nur die für die Erfindung wesentlichen Schritte beschrieben; Zwischenschritte, wie Reinigen und Besprühen mit irgendwelchen Haftmitteln sind für die Erfindung ohne Belang und wurden daher auch nicht näher erläutert.

Im Rahmen der Erfindung sind noch zahlreiche Abänderungen möglich. So kann die Verstärkungseinlage 10 z. B. mit einem Haftvermittler versehen werden, um eine gute Haftung auf dem Reifenkorpus zu erreichen. Auch kann die Vorspannung der auf den Reifen auflaufenden Verstärkungseinlage 10 durch Verändern der Vorspannung der Federn 24, 25 verändert werden.

Die Art der Verstärkungseinlage 10 ist ebenfalls mannigfach veränderbar: es können homogene oder inhomogene (versponnene) Garne oder Bänder gewickelt werden, es kann ein- oder mehrlagig gewickelt werden und es ist ein Wickeln mit oder ohne Steigung möglich.

**Patentansprüche**

1. Vorrichtung zum Giessen oder Spritzen von Fahrzeugreifen, mit welcher um einen Kern (5) in getrennten Arbeitsgängen mindestens zwei verschiedene Bereiche des Reifens gegossen oder gespritzt werden und welche mindestens zwei Gruppen von relativ zum Kern bewegbaren, die verschiedenen Bereiche des Reifens formenden Aussenschalen (49, 57) aufweist, die von zwei Segmentgruppen getragen werden, deren Segmente (48, 56) radial an den Kern (5) anstellbar sind, dadurch gekennzeichnet, dass die Segmente (48, 56) um quer zur Achse und seitlich des herzustellenden Reifens verlaufende Achsen (47) schwenkbar gelagert sind, dass der Kern (5) drehbar gelagert ist und dass eine Verstärkungseinlage (10) über eine parallel zur Achse des Reifens verschiebbare Führungseinrichtung (9) mittels des drehbaren Kerns (5) auf den inneren Reifenkörper (1) aufwickelbar ist.

2. Vorrichtung nach Anspruch 1, dadurch gekennzeichnet, dass die Segmente (48, 56) an einer Säule od. dgl. schwenkbar gelagert sind, die geteilt ist und deren beide Teile (31, 32) axial zueinander bewegbar sind, wobei an den Säulenteilen (31, 32) je ein Flansch (38 bzw. 40) drehbar gelagert ist und die Flansche (38, 40) mit die Seitenteile des Reifens formenden, den Kern (5) zwischen sich zentrierenden Formplatten (39, 41) verbindbar sind und wobei ferner der Drehantrieb (42, 43) mit einem der Flansche (38) gekuppelt ist.

3. Vorrichtung nach Anspruch 1 oder 2, dadurch gekennzeichnet, dass die Führungseinrichtung (9) mit einem Spindeltrieb (18) versehen ist, der die Führungseinrichtung (9) relativ zum Kern (5) axial bewegt.

**Claims**

1. Apparatus for casting or injection molding of tyres for vehicles with which at least two different areas of the tyre are, in separate process steps, cast or injection molded around a core (5) and which has at least two groups of outer shells (49, 57) being movable relative, to the core and forming the different areas of the tyre, said outer shells being carried by two groups of segments and the segments (48, 56) of said groups being radially approachable to the core (5), characterized in that the segments (48, 56) are pivotally supported around axes which extend in transverse direction to the axis of the tyre to be produced and laterally of same, in that the core (5) is rotatable supported and in that a reinforcing insert (10) can be wound onto the inner tyre body (1) by means of the rotatable core via a guide means (9) being shiftable in parallel relation to the axis of the tyre.

2. Apparatus as claimed in claim 1, characterized in that the segments (48, 56) are pivotally supported on a pillar (31, 32) or the like, which is subdivided and both parts (31, 32) of which are movable in axial direction relative to one another, noting that on the pillar parts (31, 32) one flange (38) respectively (40) ist rotatably supported and the flanges (38, 40) are connectable with mold plates (39, 41) forming the side portions of the tyre and centering between themselves the core (5) and noting that the rotational drive (42, 43) is coupled with one of said flanges (38).

3. Apparatus as claimed in claim 1 or 2, characterized in that the guide means (9) is provided with a worm gear (18) axially moving the guide means (9) relative to the core (5).

**Revendications**

1. Dispositif pour la coulée ou le moulage par injection de pneus de véhicules, au moyen duquel au moins deux zones différentes du pneu sont coulées ou moulées par injection autour d'un noyau (5) dans des étapes de travail séparées, et qui comporte au moins deux groupes de coquilles extérieures (49, 57), déplaçables par rapport au noyau et aptes à former les différentes zones du pneu, qui sont supportées par deux groupes de segments, parmi lesquels des segments (48, 56) sont réglables radialement sur le noyau (5), caractérisé en ce que les segments (48, 56) sont montés à pivotement autour d'axes (47) transversalement à l'axe du pneu à fabriquer et latéralement audit pneu, en ce que le noyau (5) est monté rotativement et en ce qu'une garniture de renforcement (10) peut être enroulée sur le corps intérieur (1) du pneu par le noyau rotatif (5) au moyen d'un appareil de guidage (9) pouvant coulisser parallèlement à l'axe de pneu.

2. Dispositif selon la revendication 1, caractérisé en ce que les segments (48, 56) sont montés pivotants sur une colonne ou similaire, qui est subdivisée et dont les deux parties (31, 32) sont mobiles axialement l'une par rapport à l'autre, chacune de ces parties (31, 32) portant une bride (38, 40) montée rotativement, et les brides (38, 40) peuvent être reliées aux plaques-support (39, 41) de matrice formant les parties latérales du pneu et centrant entre elles le noyau (5), le mécanisme d'entraînement en rotation (42, 43) étant accouplé à l'une (38) des brides.

3. Dispositif selon l'une des revendications 1 et 2, caractérisé en ce que l'appareil de guidage (9) est pourvu d'une broche d'entraînement (18) qui déplace axialement l'appareil de guidage (9) par rapport au noyau (5).

FIG. 1

FIG. 2

FIG. 3

FIG. 4

FIG. 5